(19) Europäisches Patentamt
European Patent Office
Office européen des brevets

(11) **EP 0 837 838 B1**

(12) **EUROPÄISCHE PATENTSCHRIFT**

(45) Veröffentlichungstag und Bekanntmachung des Hinweises auf die Patenterteilung:
**16.06.1999 Patentblatt 1999/24**

(21) Anmeldenummer: **96923862.5**

(22) Anmeldetag: **12.07.1996**

(51) Int Cl.⁶: $C04B\ 35/65$

(86) Internationale Anmeldenummer:
**PCT/DE96/01308**

(87) Internationale Veröffentlichungsnummer:
**WO 97/03032 (30.01.1997 Gazette 1997/06)**

(54) **SiO2-KÖRPER FÜR DAS C4-VERFAHREN**

SiO2 BODY FOR THE C4 PROCESS

CORPS SiO2 POUR LE PROCEDE C4

(84) Benannte Vertragsstaaten:
**DE FR GB**

(30) Priorität: **13.07.1995 DE 19525277**

(43) Veröffentlichungstag der Anmeldung:
**29.04.1998 Patentblatt 1998/18**

(73) Patentinhaber: **FORSCHUNGSZENTRUM JÜLICH GMBH**
**52425 Jülich (DE)**

(72) Erfinder: **SEEGER, Joerg**
**D-89073 Ulm (DE)**

(56) Entgegenhaltungen:
**WO-A-94/21407    US-A- 5 214 011**

**Beschreibung**

Die Erfindung bezieht sich auf ein Verfahren zur Herstellung eines aus einem $Al_2O_3$/Al-Verbundwerkstoff bestehenden Körpers.

Das aus US 5214011 bekannte $C^4$-Verfahren nutzt die Redoxreaktion

$$4Al + 3SiO_2 \rightarrow 2Al_2O_3 + 3Si$$

zur Synthese eines $Al_2O_3$/Al-Keramikmatrix-Verbundwerkstoffes. Der bei Temperaturen von über 1000°C hergestellte Werkstoff besitzt u. a. vorteilhafte mechanische Eigenschaften, die ihn z. B. als Strukturwerkstoff empfehlen. Eine wichtige Eigenschaft des $C^4$-Prozesses ist es, daß die Form und die Abmessungen der eingesetzten Probenkörper während der Umwandlung weitgehend erhalten bleiben und somit die Formgebung eines späteren Bauteiles bereits beim Ausgangskörper (sogenannte "Precursor") berücksichtigt werden kann (endkonturnahes Herstellungsverfahren).

Als Ausgangskörper für das $C^4$-Verfahren eignen sich Probenkörper aus Quarzglas-Vollmaterial. Ein solcher Vollkörper ist jedoch sehr teuer, so daß das vorgenannte Verfahren unwirtschaftlich ist.

Erheblich preiswerter als Quarzglas-Vollmaterial wäre ein aus Quarzglas-Pulver hergestellter Körper. Es war bisher jedoch nicht möglich, einen für das $C^4$-Verfahren geeigneten Körper aus Quarzglas-Pulver zu fertigen. Es zeigte sich, daß die Verwendung von aus Pulvern bestehenden Körpern zu ungleichmäßigen $C^4$-Umwandlungen führten.

Aufgabe der Erfindung ist die Schaffung eines preiswerten Herstellungsverfahrens für einen aus $Al_2O_3$/Al-Verbundwerkstoff bestehenden Körper.

Die Aufgabe wird durch das beanspruchte Verfahren gelöst.

Unter $SiO_2$ - Pulver ist sowohl das lose Pulver als auch ein aus ihm hergestellter Formkörper (Preßling) zu verstehen. In diesem Fall wird die beanspruchte Mischung hergestellt, indem der Preßling beispielsweise in die angesetzte Wasser-Alkoxidlösung getaucht wird.

Verfahrensgemäß wird zur Herstellung eines aus $SiO_2$ bestehenden Körpers z. B. folgende Reihenfolge der Verfahrensschritte ausgeführt:

-  Herstellung einer Lösung, z. B. einer Lösung aus (insbesondere basischem oder saurem Wasser) und einer Alkoxidlösung, z.B. $SiR'_x(OR)_{4-x}$ gelöst in Alkohol (R, R': organischer Rest);

-  Hinzufügen von $SiO_2$-Pulver zur Lösung.

Es können (für den $C^4$-Prozeß vorzugsweise möglichst reine und amorphe) Quarzpulver in beliebiger Korngröße und -verteilung oder Preßlinge aus demselben verarbeitet werden.

Ein Vertreter der Gruppe der Alkoxide $SiR'_x(OR)_{4-x}$ ist das Thetraethoxysilan $Si(OC_2H_5)_4$ oder dessen Oligo- und/ oder Polymere. Alkoxide sind typische Ausgangstoffe für das beanspruchte Sol-Gel-Verfahren. Sie lassen sich in der vorgeschlagenen Anwendung sehr gut einsetzen und können entsprechend den bekannten Sol-Gel-Techniken verarbeitet werden.

Vorteile der verwendeten Alkoxidgruppe gegenüber anderen Bindersystemen hinsichtlich des $C^4$-Verfahrens sind: erstens wird der Gesamtgehalt an $SiO_2$ im Körper erhöht, zweitens werden die einzelnen Pulverkörner miteinander stoffidentisch verbunden und drittens entstehen bei dieser Vorgehensweise $SiO_2$-Verbindungsbrücken (2), die das Sinter- und/ oder Umwandlungsverhalten verbessern. Es stellte sich zudem heraus, daß die $C^4$-Umwandlung homogen und gleichmäßig bei der Verwendung von Bindern mit den vorgenannten Vorteilen abläuft.

Zweckmäßigerweise weist die Mischung einen möglichst hohen Feststoffanteil von mindestens 50 gew% zur Vermeidung von Rißbildung während der Gelbildung und Trocknung auf. Es wurden Feststoffanteile von bis zu 75 bis 85 gew% erzielt.

Zur Aktivierung des Hydrolyse- und Polykondensationsschrittes wird neben einem Lösungsmedium (wie z.B. Ethylalkohol) vorteilhaft saures oder alternativ basisches Wasser der Mischung zugesetzt. Letzteres dient der katalytischen Unterstützung der Sol-Gel-Bildung. Der saure bzw. basische pH-Bereich wird durch Zugabe von z.B. HCl (so daß z. B. eine 0,1% Lösung entsteht) bzw. $NH_3$ (so daß z. B. eine 0,1% Lösung entsteht) eingestellt. Des weiteren wird hierdurch die Löslichkeit von Wasser in der Alkoxidlösung erhöht. Es läßt sich so vorteilhaft der $SiO_2$ -Anteil in der Mischung steigern. Hierdurch wird einer Schrumpfung und damit der Rißbildung bei der Gelbildung bzw. Trocknung entgegengewirkt.

Zur Beschleunigung der Gelbildung werden vorteilhaft zusätzlich Härter wie Polyethylenimin, Monoethanolamin, etc. der Mischung zugesetzt. Durch Zugabe von Dispersions- und/ oder Verflüssigungsmitteln kann der Feststoffanteil an $SiO_2$ weiter erhöht werden.

Die Reihenfolge der Schritte zur Herstellung der Mischung kann beliebig variiert werden. So kann z. B. zuerst eine Mischung aus $SiO_2$ - Pulver und Alkoxidlösung hergestellt und dann das Wasser zwecks Aktivierung der Gelbildung hinzugefügt werden.

Einem ansonsten formlosen Körper kann gezielt eine gewünschte Form verliehen werden, indem z. B. die Mischung aus losem Pulver, Wasser und Alkoxidlösung vor Gelbildung in ein entsprechend geformtes Gefäß gegossen wird.

Der so hergestellte Körper eignet sich für einen Einsatz als Ausgangskörper beim $C^4$-Verfahren, ohne Nachteile im Vergleich zum Vollkörper in Kauf nehmen zu müssen. Es können dabei sowohl gesinterte als auch ungesinterte Körper eingesetzt werden. Alternativ kann beispielsweise bereits ein vorgeformter Preßling aus $SiO_2$- Pulver in die Lösung getaucht werden.

Um den nachteilhaften Agglomeraten im $SiO_2$ - Pulver entgegenzuwirken, sollte die Mischung bei Verwendung von losem (d. h. ungepreßtem) Pulver gemahlen werden. Durch den Mahlvorgang wird die Korngrößenverteilung verbessert und damit die Dichte des herzustellenden $SiO_2$ - Körpers erhöht.

Der nach dem Verfahren hergestellte Formkörper besteht aus $SiO_2$-Pulver (1), wobei die Pulverkörner durch $SiO_2$-Brücken (2) miteinander verbunden sind. Vorteilhaft läßt sich durch das beanspruchte Verfahren ein stoffreiner Körper herstellen, d. h. er besteht zu mindestens 95% aus $SiO_2$. Der Reinheitsgrad hängt fast ausschließlich vom Reinheitsgrad des Pulvers ab. Hohe Reinheitsgrade werden zur Herstellung der Keramik-Aluminium-Körper gemäß $C^4$ -Verfahren benötigt.

Der Körper sollte z. B. nicht mehr als 0,1 gew % Natrium sowie 0,3 gew% Magnesium enthalten (um beim $C^4$-Verfahren als Ausgangskörper eingesetzt zu werden). Allgemein stört die Anwesenheit von Alkali- sowie Erdalkalimetallen die Durchführung des $C^4$- Verfahrens.

Ihr jeweiliger Anteil beträgt daher vorteilhaft weniger als 0,1 gew% an Alkali- sowie weniger als 0,3 gew% an Erdalkalimetallen.

Zur Durchführung des $C^4$-Verfahrens werden die hergestellten $SiO_2$ - Körper in eine Aluminiumschmelze bei Temperaturen von wenigstens 300 °C oberhalb des Schmelzpunktes von Aluminium getaucht. Die

Umwandlungszeit zum Aluminium-Keramik-Verbundwerkstoff ist von der Größe des Körpers abhängig. Beispielsweise werden 1,5 mm $SiO_2$ innerhalb von einer Stunde bei 1150 °C umgewandelt.

Ausführungsbeispiel:

Es wurde dem Quarzpulver (300 g) (mittlerer Korndurchmesser: Ø = 8 und / oder 28 und/ oder 127μm) zuerst Ethylalkohol und Polyethylsilikat=Oligomer des oben erwähnten Thetraethoxysilan zugegeben Mischungsverhältnis: Polyethylsilikat : Ethylalkohol = 5 : 4 oder 5:3, 150g Gesamtmenge). Dieser Mischung wurde Polyethylenimin (0,1 gew% des Feststoffanteils) zugegeben. Anschließend erfolgte ein mehrstündiges (24h) Mischen und Mahlen, um eine möglichst feine und homogene (d.h. agglomeratfreie) Mischung zu gewinnen. Während des Misch- und Mahlvorganges verflüssigte sich die Mischung, so daß dann die Möglichkeit bestand, den Feststoffanteil durch Nachchargieren mit Quarzpulver zu erhöhen. (Nach und nach wurden 300 g zugefügt.) Hierdurch von ein Feststoffanteil von 80 gew% erreicht. Nach dem Mischen und Mahlen wurde der Mischung leicht angesäuertes Wasser (0,1 %ige HCl-Lösung/ 17 g) zugesetzt. Diese Mischung wurde kurz und intensiv gerührt, zur Beschleunigung der Sol-Gel-Bildung erwärmt (auf 60 °C) und zur Vermeidung von Poren entgast. Anschließend wurde die Mischung in Formen gegossen. Die getrockneten Proben wurden zum Teil gesintert und ansonsten ohne Sinterung umgewandelt.

Zur Durchführung des $C^4$ - Prozesses wurden die Körper auf 1150 °C erhitzt und in ein 1150 °C heißes Aluminiumbad (Hüttenaluminium, 99,7 Reinheitsgrad) getaucht. Die Umwandlung zum Kermik-Metall-Verbundkörper erfolgte innerhalb einiger Stunden. Der Körper ist danach vollständig und homogen umgewandelt.

Ein wirtschaftlich wichtiger Vorteil der beschriebenen Methode ist, daß die verfahrensgemäß hergestellten Körper nach kurzem Aufheizen auf Umwandlungstemperatur beim $C^4$-Prozeß auch direkt als Ausgangskörper eingesetzt werden konnten. Der zeit- und energieintensive Schritt des Sinterns konnte also eingespart werden.

## Patentansprüche

1. Verfahren zur Herstellung eines aus einem $Al_2O_3$/ Al-Verbundwerkstoff bestehenden Körpers mit den Schritten:

   - Herstellung eines Formkörpers aus einer eine Alkoxidlösung, $SiO_2$-Pulver und Wasser umfassenden Mischung durch Sol-Gel-Bildung,
   - Eintauchen des Formkörpers in eine Aluminiumschmelze bei Temperaturen von wenigstens 300 °C oberhalb des Schmelzpunktes von Aluminium.

## Claims

1. Process for the manufacture of an object composed of an $Al_2O_3$/Al-composite material in the following stages:

   - manufacture of a shape from a mixture including an alkoxide solution, $SiO_2$ powder and water by way of forming a Sol-Gel;

   - immersion of the shape into an aluminium melt at temperatures of at least 300°C above the melting point of Aluminium.

## Revendications

1. Procédé de préparation d'un corps constitué d'un matériau composite en $Al_2O_3$/Al comprenant les stades :

   - de fabrication d'un corps moulé en un mélange renfermant une solution d'alcoolate, de la poudre de $SiO_2$ et de l'eau par formation d'un sol-gel,

- d'immersion du corps moulé dans de l'aluminium fondu à des températures d'au moins 300°C supérieures au point de fusion de l'aluminium.